Europäisches Patentamt

European Patent Office

Office européen des brevets

(11) Veröffentlichungsnummer: **0 215 371**
**A2**

(12) **EUROPÄISCHE PATENTANMELDUNG**

(21) Anmeldenummer: **86112154.9**

(22) Anmeldetag: **02.09.86**

(51) Int. Cl.⁴: **G02B 5/28**

(30) Priorität: **17.09.85 DE 3533169**

(43) Veröffentlichungstag der Anmeldung:
**25.03.87 Patentblatt 87/13**

(84) Benannte Vertragsstaaten:
**DE FR GB**

(71) Anmelder: **Siemens Aktiengesellschaft Berlin
und München
Wittelsbacherplatz 2
D-8000 München 2(DE)**

(72) Erfinder: **Mahlein, Hans F., Dr.
Queristrasse 2
D-8025 Unterhaching(DE)**

(54) **Kanten-Interferenzfilter für die optische Nachrichtenübertragung im Wellenlängenmultiplex.**

(57) Es wird ein kurzwellig transmittierendes Kanten-Interferenzfilter für großen Kanalabstand von etwa 200 nm bei einer Sperrbereichsmittenwellenlänge von etw 1300 nm beschrieben. Das Filter besteht aus einer Schichtenfolge aus insgesamt 23 abwechselnd höher-und niedrigerbrechenden Schichten, wobei jede höherbrechende Schicht den Brechungsindex 2,08 und jede niedrigerbrechende Schicht den Brechungsindex 1,45 aufweist. Die auf 20° Einfallswinkel und auf ein Viertel der Sperrbereichsmittenwellenlänge von 1260 nm normierten effektiven optischen Schichtdicken der einzelnen Schichten betragen ausgehend von einer äußeren Schicht für die ersten vier Schichten nacheinander 1,146, 0,909, 1,039 bzw. 0,932, von der fünften Schicht bis zur einschließlich neunzehnten Schicht konstant 1 und für die letzten vier Schichten nacheinander 0,932, 1,039, 0,909 bzw. 1,146. Zu diesem Filter existiert als spektral komplementäres Gegenstück ein Filter, das ebenfalls mit nur zwei Materialien aufgebaut ist.

FIG 1

auf Sperrbereichs-mittenwellenlänge normierte effektive optische Schichtdicke ↓ — Einfallswinkel ⌐20° — Brechzahl ↓

| Schicht | effektive optische Schichtdicke | Brechzahl |
|---|---|---|
| S₁ | | 1,45 |
| H₁ | 1,146 | 2,08 |
| L₁ | 0,909 | 1,45 |
| H₂ | 1,039 | 2,08 |
| L₂ | 0,932 | 1,45 |
| H₃ | 1 | 2,08 |
| L₃ | 1 | 1,45 |
| H₄ | 1 | 2,08 |
| L₄ | 1 | 1,45 |
| H₅ | 1 | 2,08 |
| L₅ | 1 | 1,45 |
| H₆ | 1 | 2,08 |
| L₆ | 1 | 1,45 |
| H₇ | 1 | 2,08 |
| L₇ | 1 | 1,45 |
| H₈ | 1 | 2,08 |
| L₈ | 1 | 1,45 |
| H₉ | 1 | 2,08 |
| L₉ | 1 | 1,45 |
| H₁₀ | 1 | 2,08 |
| L₁₀ | 0,932 | 1,45 |
| H₁₁ | 1,039 | 2,08 |
| L₁₁ | 0,909 | 1,45 |
| H₁₂ | 1,146 | 2,08 |
| S₂ | | 1,45 |

SF

EP 0 215 371 A2

## Kanten-Interferenzfilter für die optische Nachrichtenübertragung im Wellenlängenmultiplex

Die vorliegende Erfindung betrifft ein Kanten-Interferenzfilter für die optische Nachrichtenübertragung im Wellenlängenmultiplex nach dem Oberbegriff des Patentanspruchs 1.

Filter der genannten Art sind beispielsweise aus H.F. Mahlein: Opt. Laser Technol. 13 (1981) S. 13-20 bekannt. Für die optische Nachrichtenübertragung im Wellenlängenmultiplex werden unter gewissen Umständen Paare spektral komplementärer Kanten-Interferenzfilter benötigt. Derartige Paare sind in unverkitteter Ausführung, beispielsweise aus H.A. Macleod: Thin Film Optical Filters, Hilger, London, 1969, S. 111-153 bekannt.

Die Theorie verkitteter Kanten-Interferenzfilter - (siehe genannte Literaturstelle in Opt. Laser Technol. 13) zeigt, daß sich mit dem aus $SiO_2$ und $TiO_2$ bestehenden üblichen Schichtmaterialien kurzwellig transmittierende Filter nur für enge Kanalabstände, etwa 40 nm bei einer Wellenlänge von 1300 nm und 20° Einfallswinkel, und langwellig transmittierende Filter nur für große Kanalabstände, etwa 120 nm bei einer Wellenlänge von 1300 nm und 20° Einfallswinkel realisieren lassen.

Langwellig transmittierende Kanten-Interferenzfilter für enge Kanalabstände und kurzwellig transmittierende Filter für große Kanalabstände lassen sich dagegen mit dem bisher beschriebenen Schichtaufbau nicht realisieren.

Aufgabe der vorliegenden Erfindung ist es, ein verkittetes kurzwellig transmittierendes Kanten-Interferenzfilter für großen Kanalabstand anzugeben.

Diese Aufgabe wird ausgehend von einem Kanten-Interferenzfilter der eingangs genannten Art durch die im kennzeichnenden Teil des Patentanspruchs 1 angegebenen Merkmale gelöst.

Das erfindungsgemäße Filter weist vorteilhafterweise einen breiten Sperrbereich von etwa 200 nm bei einer Sperrbereichsmittenwellenlänge von etwa 1300 nm auf. Es ist vorteilhafterweise für die Wellenlängenmultiplex-Übertragung mit Lumineszenzdioden mit Sperrbereichsmittenwellenlängen von 830 nm und 1300 nm bei einem optischen Schmalbandnetz, insbesondere einem Schmalband ISDN, zusammen mit einem bereits existierenden einfacheren verkitteten spektralkomplementären Kantenfilter verwendbar, das auch in einem optischen Breitbandnetz, beispielsweise beim BIGFON, einsetzbar ist.

Die Erfindung wird anhand der Figuren in der folgenden Beschreibung näher erläutert. Von den Figuren zeigen:

Figur 1 das Kanten-Interferenzfilter in einer ausschnittsweisen Seitenansicht, und

Figur 2 das gemessene Transmissionsvermögen des Filters nach Figur 1 für unpolarisierte Strahlung und für die s-und die p-Komponente dieser Strahlung in Abhängigkeit von der Wellenlänge.

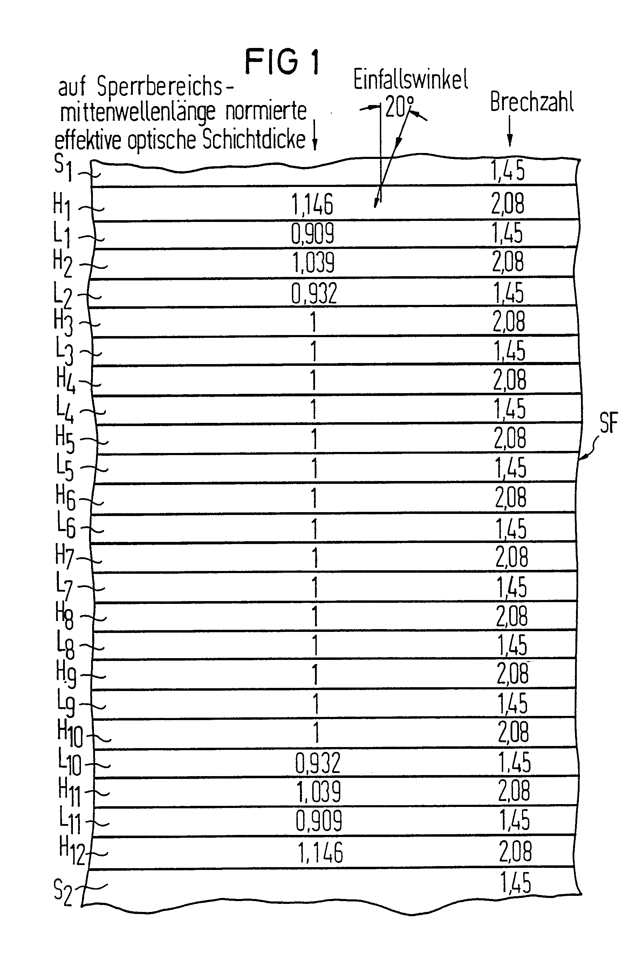

Nach Figur 1 besteht das vorgeschlagene Kanten-Interferenzfilter aus der zwischen angrenzenden äußeren Medien $S_1$ und $S_2$ angeordneten Schichtfolge SF aus den abwechselnd höher und niedriger brechenden Schichten $H_1$, $L_1$, $H_2$, $L_2$, ..., $H_{11}$, $L_{11}$ und $H_{12}$. Die beiden an die äußeren Medien $S_1$ und $S_2$ unmittelbar angrenzenden äußeren Schichten $H_1$ und $H_{12}$ der Schichtenfolge SF sind höherbrechende Schichten. Die beiden äußeren Medien $S_1$ und $S_2$ bestehen aus einem Substrat, beispielsweise einem Glasfaserkern mit der Brechzahl 1,45 ± 0,05 bzw. aus einem Superstrat, beispielsweise einem transparenten optischen Klebstoff mit der gleichen Brechzahl wie das Substrat.

Die höherbrechenden Schichten $H_1$, $H_2$, ..., $H_{11}$, $H_{12}$ der Schichtenfolge SF bestehen aus einem Material der Brechzahl 2,08 ± 0,05, beispielsweise aus $TiO_2$. Die niedrigerbrechenden Schichten $L_1$, $L_2$, ..., $L_{11}$ der Schichtenfolge SF bestehen aus einem Material der Brechzahl 1,45 ± 0,05, beispielsweise aus $SiO_2$, aus dem auch das Substrat bestehen kann.

Etwa in der horizontalen Mitte der Figur 1 ist für jede der Schichten $H_1$, $L_1$, $H_2$, $L_2$, ..., $H_{11}$, $L_{11}$, $H_{12}$ die zugehörige, auf einen Einfallswinkel von 20° bezogene und auf ein Viertel einer Sperrbereichsmittenwellenlänge von 1260 nm normierte effektive optische Schichtdicke eingetragen.

Rechts neben den Schichtdicken sind untereinander die Brechzahlen des Mediums $S_1$, der einzelnen Schichten der Schichtenfolge SF und des Mediums $S_2$ angegeben.

Danach haben die Schichten $H_1$ und $H_{12}$ jeweils eine genannte normierte Schichtdicke von 1,146, die Schichten $L_1$ und $L_{11}$ jeweils eine normierte Schichtdicke von 0,909, die Schichten $H_2$ und $H_{11}$ jeweils eine Schichtdicke von 1,039, die Schichten $L_2$ und $L_{10}$ jeweils eine Schichtdicke von 0,932, und die übrigen Schichten $H_3$, $L_3$, $H_4$, $L_4$, ..., $H_9$, $L_9$, $H_{10}$ jeweils eine Schichtdicke von 1.

Es unterscheiden sich also nur die normierten Schichtdicken der vier Schichten $H_1$, $L_1$, $H_2$ und $L_2$ untereinander und von 1. Das gleiche gilt für die vier Schichten $H_{12}$, $L_{11}$, $H_{11}$, $L_{10}$. Dagegen sind die normierten Schichten der Schichten $H_3$, $L_3$, ..., $L_9$, $L_{10}$ konstant gleich 1. Die Schichtdickenvariation der äußersten vier Schichten auf beiden Seiten der Schichtenfolge SF reicht voll aus, um Reflexionsnebenmaxima im Spektralbereich zwischen 700 nm und 920 nm weitgehend zu unterdrücken. Der Sperrbereich bleibt dabei praktisch unverändert.

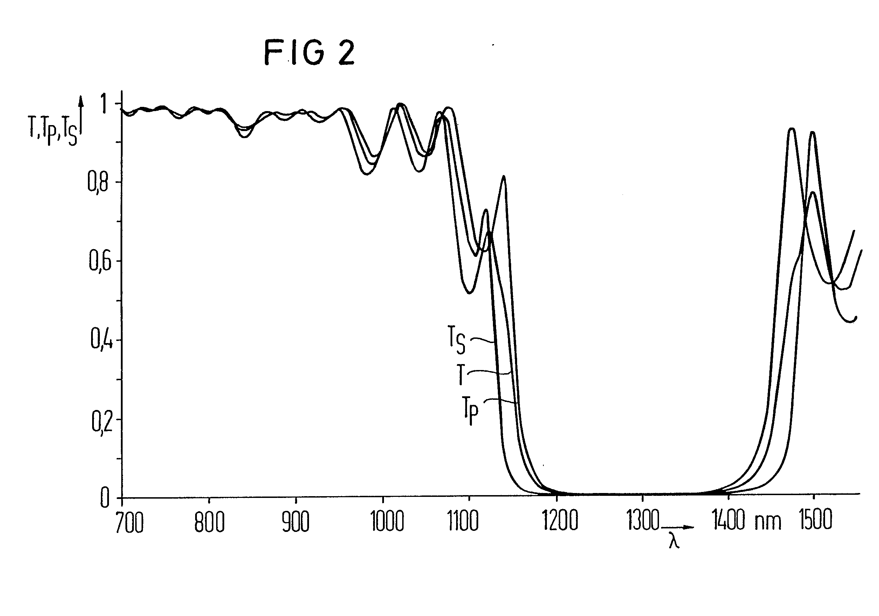

Die Figur 2 zeigt für ein aufgedampftes und verkittetes Filter nach Figur 1 das spektrale Transmissionsvermögen $T$ für unpolarisierte Strahlung, das Transmissionsvermögen $T_s$ für die s-Komponente, d.h. der zur Einfallsebene senkrechten Komponente der linear polarisierten Strahlung, und das Transmissionsvermögen $T_p$ für die p-Komponente, d.h. der zur Einfallsebene parallelen Komponente dieser Strahlung für den Einfallswinkel 20°. Deutlich ist zu erkennen, daß der Sperrbereich etwa zwischen 1200 nm und 1400 nm liegt.

Das vorliegende Filter kann auch kurz durch eine formelartige Symbolik wie folgt charakterisiert werden:

S1,146H0,909L1,039H0,932L(HL)-
'H0,932L1,039H0,909L1,146HS.

Dabei steht S für äußeres Medium, H für höherbrechende Schicht, L für niedrigerbrechende Schicht, und eine Zahl vor H oder L gibt die oben definierte normierte Schicht dicke der betreffende Schicht an. Keine Zahl vor H oder L bedeutet, daß die genannte Schichtdicke der betreffenden Schicht 1 ist. Die Hochzahl 7 gibt an, wie oft sich die in Klammern stehende Schichtperiode aus den beiden Schichten H und L wiederholt.

## Ansprüche

Kanten-Interferenzfilter für die optische Nachrichtenübertragung im Wellenlängenmultiplex, mit einer zwischen angrenzenden äußeren Medien ($S_1$; $S_2$) angeordneten Schichtenfolge (SF) aus abwechselnd höher-und niedrigerbrechenden Schichten ($H_1$; $L_1$; $H_2$; $L_2$;...,$H_{11}$; $L_{11}$; $H_{12}$), wobei die beiden an die äußeren Medien ($S_1$; $S_2$) mit der Brechzahl einer niedrigerbrechenden Schicht angrenzenden äußeren Schichten ($H_1$; $H_{12}$) der Schichtenfolge (SF) höherbrechende Schichten sind,

**dadurch gekennzeichnet,**

daß die Schichtenfolge (SF) aus insgesamt dreiundzwanzig abwechselnd höher-und niedrigerbrechenden Schichten ($H_1$; $L_1$; $H_2$; $L_2$; ...,$H_{11}$; $L_{11}$; $H_{12}$) besteht, daß jede höherbrechende Schicht ($H_1$; $H_2$;...,$H_{11}$; $H_{12}$) aus einem Material der Brechzahl 2,08 und jede niedrigerbrechende Schicht ($L_1$; $L_2$; ...,$L_{11}$) aus einem Material der Brechzahl 1,45 besteht, und

daß die einzelnen Schichten ($H_1$; $L_1$; $H_2$; $L_2$;...,$H_{11}$; $L_{11}$ $H_{12}$) eine auf 20° Einfallswinkel und auf ein Viertel einer Sperrbereichsmittenwellenlänge von 1260 nm normierte optischen Schichtdicke haben, die ausgehend von einer äußeren Schicht ($H_1$) der Schichtenfolge (SF) und bis auf eine zulässige Abweichung um höchstens 2 % für die erste bis vierte Schicht ($H_1$; $L_1$; $H_2$; $H_2$) nacheinander 1,146, 0,909, 1,039 bzw. 0,932 beträgt, für die fünfte bis einschließlich neunzehnte Schicht ($H_3$; $L_3$,. ..,$L_9$; $H_{10}$) jeweils konstant 1 ist und für die zwanzigste bis dreiundzwanzigste Schicht ($L_{10}$, $H_{11}$, $L_{11}$, $H_{12}$) nacheinander 0,932, 1,039, 0,909 bzw. 1,146 beträgt.

# FIG 1

auf Sperrbereichs-mittenwellenlänge normierte effektive optische Schichtdicke ↓   Einfallswinkel →20°   Brechzahl ↓

| | auf Sperrbereichs-mittenwellenlänge normierte effektive optische Schichtdicke | Brechzahl |
|---|---|---|
| $S_1$ | | 1,45 |
| $H_1$ | 1,146 | 2,08 |
| $L_1$ | 0,909 | 1,45 |
| $H_2$ | 1,039 | 2,08 |
| $L_2$ | 0,932 | 1,45 |
| $H_3$ | 1 | 2,08 |
| $L_3$ | 1 | 1,45 |
| $H_4$ | 1 | 2,08 |
| $L_4$ | 1 | 1,45 |
| $H_5$ | 1 | 2,08 |
| $L_5$ | 1 | 1,45 |
| $H_6$ | 1 | 2,08 |
| $L_6$ | 1 | 1,45 |
| $H_7$ | 1 | 2,08 |
| $L_7$ | 1 | 1,45 |
| $H_8$ | 1 | 2,08 |
| $L_8$ | 1 | 1,45 |
| $H_9$ | 1 | 2,08 |
| $L_9$ | 1 | 1,45 |
| $H_{10}$ | 1 | 2,08 |
| $L_{10}$ | 0,932 | 1,45 |
| $H_{11}$ | 1,039 | 2,08 |
| $L_{11}$ | 0,909 | 1,45 |
| $H_{12}$ | 1,146 | 2,08 |
| $S_2$ | | 1,45 |

SF

FIG 2